# EUROPEAN PATENT APPLICATION

(11) **EP 4 516 445 A1**
(43) Date of publication of application: **05.03.2025**
(21) Application number: 23835128.2
(22) Date of filing: 20.04.2023
(51) Int. Cl.: B23P 21/00, B23P 19/00, B23P 19/02, F02C 7/20, F23R 3/42, F23R 3/60

(54) **ASSEMBLY METHOD AND ASSEMBLY DEVICE**

(30) Priority: 05.07.2022 JP 2022108293
(71) Applicant: Mitsubishi Heavy Industries Aero Engines, Ltd., Komaki-shi, Aichi 485-0826, (JP)
(72) Inventor: EGASHIRA Kento, Komaki-shi, Aichi 485-0826 (JP); KURIHARA Hiroshi, Komaki-shi, Aichi 485-0826 (JP); NAKAMURA Futoshi, Komaki-shi, Aichi 485-0826 (JP); ISHIDA Makoto, Tokyo 100-8332 (JP); ASANO Shin, Tokyo 100-8332 (JP); SUGIURA Atsushi, Tokyo 100-8332 (JP); TAKEDA Kazuma, Komaki-shi, Aichi 485-0826 (JP)
(74) Representative: Studio Torta S.p.A.
(86) International application number: PCT/JP2023/015727
(87) International publication number: WO 2024/009587

(57) **Abstract**

Provided are an assembly method and an assembly device capable of identifying, from among a plurality of overlapping regions, an overlapping region that requires adjustment. In this assembly method for assembling a bulkhead (30) to an outer liner (11) by fitting the bulkhead (30) into the outer liner (11) in a prescribed position, the bulkhead (30) having a plurality of through-holes (32a) formed in a circumferential direction, with an axis (Xb) as a central axis, and the outer liner (11) having a plurality of through-holes (11a) formed in a circumferential direction, with an axis (Xo) as a central axis, a computer executes: a size detection step for detecting a size of an overlapping region between each corresponding through-hole (11a) and through-hole (32a), with the bulkhead (30) fitted into the outer liner (11); and an overlapping region identification step for identifying, on the basis of the sizes of all the overlapping regions, overlapping regions in which a positional relationship between the through-hole (11a) and the through-hole (32a) requires adjustment.

## Description

### Technical Field

The present disclosure relates to an assembly method and an assembly device.

### Background Art

For example, a turbofan engine mounted in an aircraft is provided with a combustor that mixes compressed air and fuel and combusts the mixture (PTL 1).

The combustor has, for example, a combustion chamber defined by a tubular outer combustor, a tubular inner combustor, and an annular bulkhead.

### Citation List

### Patent Literature

[PTL 1] PCT Japanese Translation Patent Publication No. 2015-532411

### Summary of Invention

### Technical Problem

In the assembly of the combustor, for example, the work of fitting the bulkhead to the outer combustor occurs.

A plurality of through-holes into which tightening bolts are inserted are formed in the bulkhead and the outer combustor along a circumferential direction. It is preferable that the positions of the through-holes are uniformly matched with each other at all points in order to accurately fasten the bulkhead to the outer combustor. That is, it is preferable to adjust the size of the overlapping region such that the overlapping region between the through-hole of the bulkhead and the through-hole of the outer combustor is uniform at all points along the circumferential direction. However, a method for specifying the overlapping region that needs to be adjusted has not been determined.

The present disclosure has been made in view of these circumstances, and an object of the present disclosure is to provide an assembly method and an assembly device that can specify an overlapping region that needs to be adjusted among a plurality of overlapping regions.

### Solution to Problem

In order to solve the above problems, an assembly method and an assembly device according to the present disclosure adopt the following means.

That is, according to an aspect of the present disclosure, there is provided an assembly method for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body. The assembly method includes causing a computer to execute: a size detection step of detecting a size of an overlapping region between each of the first through-holes and each of the second through-holes corresponding to each other in a state in which the second tubular body is fitted to the first tubular body; and an overlapping region specification step of specifying the overlapping region in which a positional relationship between the first through-hole and the second through-hole needs to be adjusted, on the basis of the sizes of all of the overlapping regions.

According to another aspect of the present disclosure, there is provided an assembly device for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body. The assembly device includes a holding tool that holds a shaft member and a control unit. The control unit controls the holding tool such that the shaft member is inserted into an overlapping region between the first through-hole and the second through-hole, controls the holding tool such that the shaft member is moved in a direction orthogonal to an insertion direction, calculates an amount of backlash of the shaft member in the overlapping region on the basis of an amount of movement of the shaft member, and specifies the overlapping region in which a positional relationship between the first through-hole and the second through-hole needs to be adjusted on the basis of the calculated amounts of backlash in all of the overlapping regions.

### Advantageous Effects of Invention

According to the present disclosure, it is possible to specify an overlapping region that needs to be adjusted from a plurality of overlapping regions.

### Brief Description of Drawings

Fig. 1 is a perspective view illustrating a combustor according to an embodiment of the present disclosure.
Fig. 2 is a cross-sectional view illustrating the combustor taken along a line II-II of Fig. 1.
Fig. 3 is a perspective view illustrating an outer combustor.
Fig. 4 is a perspective view illustrating an inner combustor.
Fig. 5 is a perspective view illustrating a bulkhead.
Fig. 6 is a flowchart illustrating an assembly method according to an embodiment of the present disclosure.
Fig. 7 is a perspective view illustrating an aspect in which the bulkhead is transported to the outer combustor.
Fig. 8 is a perspective view illustrating an aspect in which the bulkhead is positioned with respect to the outer combustor (outer liner).
Fig. 9 is a perspective view illustrating an aspect in which an alignment pin is inserted.
Fig. 10 is a partially enlarged perspective view illustrating an aspect in which the alignment pin is inserted.
Fig. 11 is a view illustrating a relationship between the overlapping region and the alignment pin.
Fig. 12 is a view illustrating a concept of a mechanism of the alignment pin.
Fig. 13 is a view illustrating an example of the mechanism of the alignment pin.
Fig. 14 is a view illustrating the relationship between the overlapping region and the alignment pin.
Fig. 15 is a perspective view illustrating an aspect in which the bulkhead is fitted to the outer combustor (outer liner).
Fig. 16 is a perspective view illustrating an aspect in which a hole alignment operation is performed in a state in which the bulkhead is fitted to the outer combustor (outer liner).
Fig. 17 is a perspective view illustrating an aspect in which a bolt is inserted.
Fig. 18 is a partially enlarged perspective view illustrating an aspect in which the bolt is inserted (outer peripheral surface side).
Fig. 19 is a partially enlarged perspective view illustrating an aspect in which the bolt is inserted (inner peripheral surface side).
Fig. 20 is a view illustrating an aspect in which the size of the overlapping region is detected.
Fig. 21 is a perspective view illustrating an aspect in which an assembly is transported to the inner combustor.
Fig. 22 is a perspective view illustrating an aspect in which the assembly is fitted to the inner combustor (inner liner).

### Description of Embodiments

Hereinafter, an embodiment of an assembly method and an assembly device according to the present disclosure will be described with reference to the drawings.

### [Basic Configuration of Combustor]

First, a basic configuration of a combustor 1, which is an example of an object to which the assembly method and the assembly device are to be applied, will be described.

The combustor 1 is a device defining a combustion chamber CC that mixes compressed air and fuel and combusts the mixture to generate a high-temperature combustion gas for rotating a turbine in, for example, a turbofan engine mounted in an aircraft.

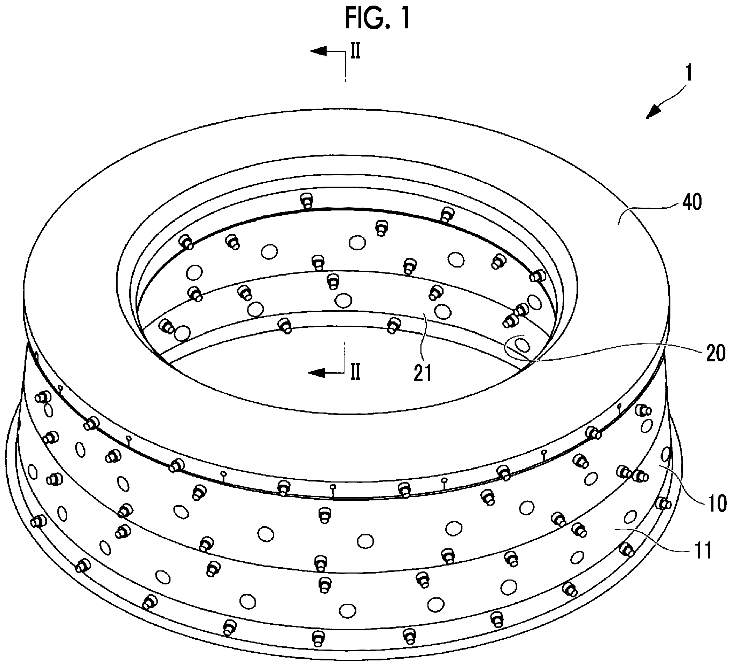

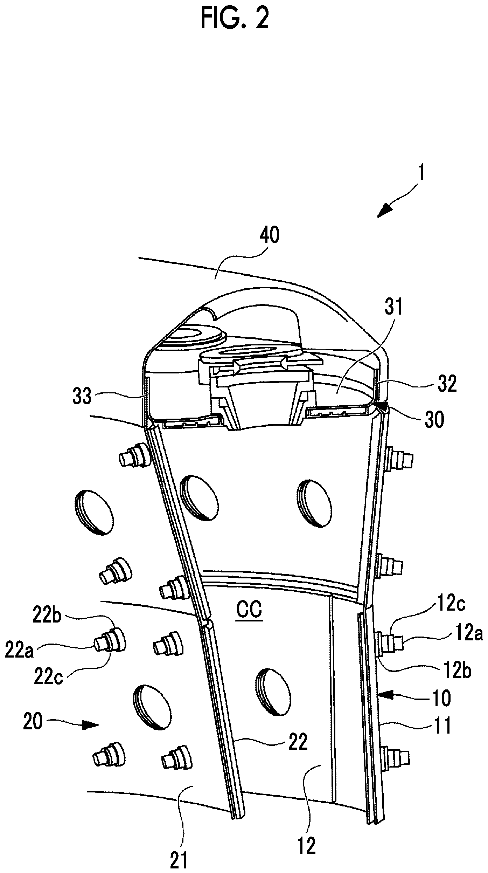

As illustrated in Figs. 1 and 2, the combustor 1 includes an outer combustor 10, an inner combustor 20, a bulkhead 30, and a hood 40.

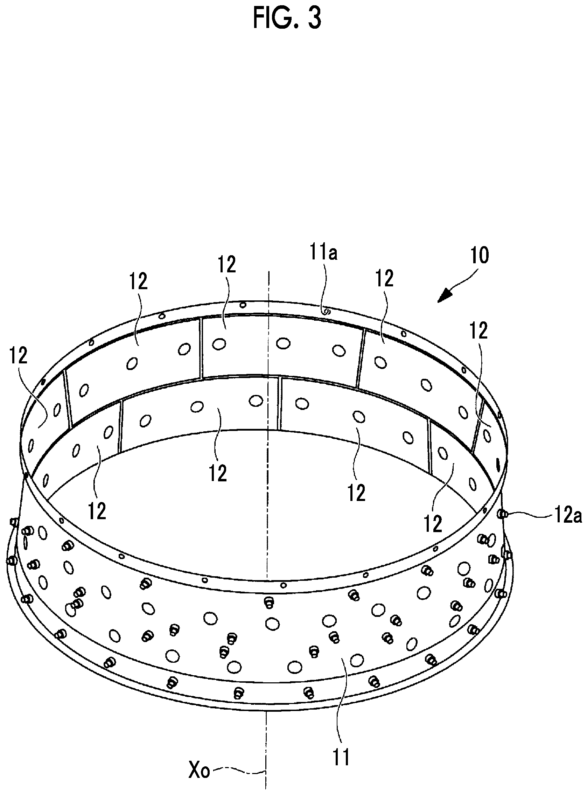

As illustrated in Figs. 2 and 3, the outer combustor 10 is a component that has a cylindrical shape as a whole and that includes an outer liner 11 and a plurality of outer liner panels 12 (hereinafter, simply referred to as "panels 12") provided on an inner peripheral surface of the outer liner 11.

The outer liner 11 is a metal component with a cylindrical shape having an axis Xo as a central axis and is made of, for example, sheet metal.

The inner peripheral surface of the outer liner 11 facing the combustion chamber CC is divided by the plurality of panels 12. The substantially entire inner peripheral surface is covered by the panels 12. The panels 12 thermally protect the outer liner 11 from the combustion gas.

As illustrated in Figs. 2 and 3, each of the panels 12 is a component having an arc shape corresponding to the shape of each part of the outer peripheral surface of the outer liner 11 and is configured, for example, by performing a heat resistant treatment (for example, ceramic coating) on a surface of a cast plate member.

A plurality of studs 12a that protrude outward are provided on an outer peripheral surface of each of the panels 12.

Each of the panels 12 is fixed to the outer liner 11 by inserting the stud 12a into a hole formed in the outer liner 11 and attaching a washer 12b and a nut 12c to the stud 12a protruding from the hole.

A plurality of through-holes 11a are formed at substantially equal angular intervals in a peripheral surface (edge portion) on one end side of the outer liner 11 along a circumferential direction having the axis Xo as the central axis. The edge portion is not covered with the panels 12. An outer wall portion 32 of the bulkhead 30 is fitted (for example, interference-fitted) to the edge portion, which will be described below.

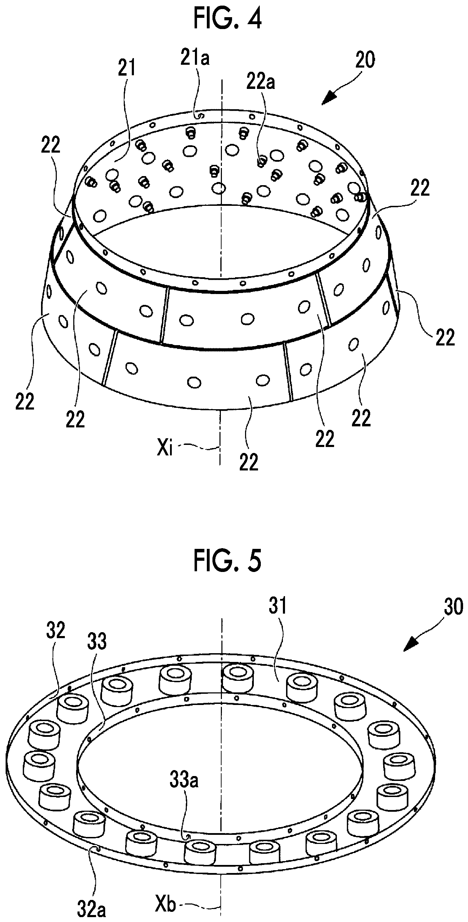

As illustrated in Figs. 2 and 4, the inner combustor 20 is a component that has a cylindrical shape as a whole and that includes an inner liner 21 and a plurality of inner liner panels 22 (hereinafter, simply referred to as "panels 22") provided on an inner peripheral surface of the inner liner 21.

As illustrated in Figs. 1 and 2, the inner combustor 20 is disposed inside the outer combustor 10 in the combustor 1 after assembly.

As illustrated in Figs. 2 and 4, the inner liner 21 is a metal component with a cylindrical shape having an axis Xi as a central axis and is made of, for example, sheet metal.

An outer peripheral surface of the inner liner 21 facing the combustion chamber CC is divided by the plurality of panels 22, and the substantially entire outer peripheral surface is covered by the plurality of panels 22. The panels 22 thermally protect the inner liner 21 from the combustion gas.

As illustrated in Figs. 2 and 4, each of the panels 22 is a component having an arc shape corresponding to the shape of each part of the outer peripheral surface of the inner liner 21 and is configured, for example, by performing a heat resistant treatment (for example, ceramic coating) on a surface of a cast plate member.

A plurality of studs 22a protruding inward are provided on an inner peripheral surface of each of the panels 22.

Each panel 22 is fixed to the inner liner 21 by inserting the stud 22a into a hole formed in the inner liner 21 and attaching a washer 22b and a nut 22c to the stud 22a protruding from the hole.

A plurality of through-holes 21a are formed at substantially equal angular intervals in a peripheral surface (edge portion) on one end side of the inner liner 21 along a circumferential direction having the axis Xi as the central axis. The edge portion is not covered with the panels 22. An inner wall portion 33 of the bulkhead 30 is fitted (for example, interference-fitted) to the edge portion, which will be described below.

As illustrated in Figs. 1 and 2, the bulkhead 30 is an annular component that has an axis Xb as a central axis and that is installed to close an annular opening formed between one end of the outer combustor 10 and one end of the inner combustor 20.

As illustrated in Figs. 2 and 5, the bulkhead 30 has an annular bottom portion 31, an outer wall portion 32 that is erected from an outer peripheral edge of the bottom portion 31, and an inner wall portion 33 that is erected from an inner peripheral edge of the bottom portion 31.

The outer wall portion 32 is fitted to the outer liner 11, which will be described below. The inner wall portion 33 is fitted to the inner liner 21.

A plurality of through-holes 32a are formed at substantially equal angular intervals in the outer wall portion 32 along a circumferential direction having the axis Xb as the central axis.

The angular interval between the through-holes 32a is equal to the angular interval between the through-holes 11a. Therefore, when the bulkhead 30 is fitted to the outer liner 11, the position of each through-hole 32a can be matched with the position of each through-hole 11a in the circumferential direction.

A plurality of through-holes 33a are formed at substantially equal angular intervals in the inner wall portion 33 along the circumferential direction having the axis Xb as the central axis.

The angular interval between the through-holes 33a is equal to the angular interval between the through-holes 21a. Therefore, when the bulkhead 30 is fitted to the inner liner 21, the position of each through-hole 32a can be matched with the position of each through-hole 21a in the circumferential direction.

As illustrated in Fig. 2, in the combustor 1 after assembly, the outer wall portion 32 of the bulkhead 30 is in contact with the inner peripheral surface of the outer combustor 10, and the inner wall portion 33 of the bulkhead 30 is in contact with the inner peripheral surface of the inner combustor 20.

The bulkhead 30 is fixed to the outer combustor 10 and the inner combustor 20 by screwing a bolt 51 inserted into the outer wall portion 32 and the outer combustor 10 to a nut plate 52 (nut portion) provided on the outer wall portion 32 and screwing the bolt 51 inserted into the inner wall portion 33 and the inner combustor 20 to the nut plate 52 provided on the inner wall portion 33. Details will be described below.

The combustion chamber CC is defined by the outer combustor 10, the inner combustor 20, and the bulkhead 30.

As illustrated in Figs. 1 and 2, the hood 40 is an annular component that is installed to cover the bulkhead 30.

The combustor 1 configured as described above functions as follows.

That is, air compressed by a compressor and fuel are supplied to the combustion chamber CC and are mixed in the combustion chamber CC.

Then, a mixed fluid of the air and the fuel is combusted in the combustion chamber CC to generate a high-temperature combustion gas for rotating the turbine.

### [For Assembly Method and Assembly Device]

Next, the assembly method will be described.

The assembly of the combustor 1 using this assembly method is performed by a robot system including a transport tool 61, a hole alignment tool 62, a pushing tool 63, and a nut runner 64 (holding tool).

For example, each of the transport tool 61, the hole alignment tool 62, the pushing tool 63, and the nut runner 64 constituting the robot system is provided in a robot arm, and the operation thereof is optionally controlled according to the work.

The control for the operation of the robot system is executed by a control unit 82 (controller).

The control unit 82 includes, for example, a central processing unit (CPU: processor), a main memory, a secondary storage: memory), and the like. Further, the control unit 82 may include a communication unit for transmitting and receiving information to and from other devices.

The main memory is configured by, for example, a writable memory, such as a cache memory or a random access memory (RAM), and is used as a work area that performs the reading of an execution program of the CPU, the writing of processing data by the execution program, and the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions is stored in the secondary storage in the form of a program, and the CPU reads the program into the main memory and executes a process of processing and calculating information to implement various functions. For the program, for example, the following forms may be applied: a form in which the program is installed in advance in the secondary storage; a form in which the program is provided in a state in which the program is stored in a computer readable storage medium; and a form in which the program is delivered via wired or wireless communication means. Examples of the computer readable storage medium include a magnetic disk, a magneto-optical disk, a CD-ROM, a DVD-ROM, and a semiconductor memory.

This assembly method includes a step of fitting the bulkhead 30 (specifically, the outer wall portion 32 (second tubular body)) to the outer combustor 10 (specifically, the outer liner 11 (first tubular body)), fixing the bulkhead 30 to the outer combustor 10 with the bolts 51, fitting the bulkhead 30 in the assembly to the inner combustor 20 (specifically, the inner liner 21), and then fixing the bulkhead 30 to the inner combustor 20 with the bolts 51.

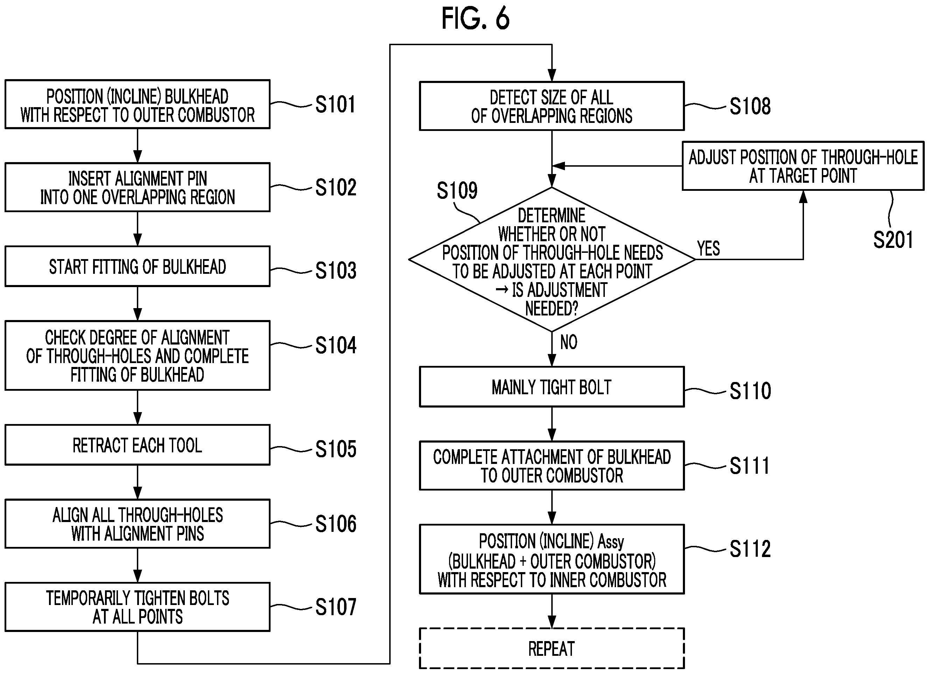

Hereinafter, the assembly method will be described in detail with reference to a flowchart illustrated in Fig. 6.

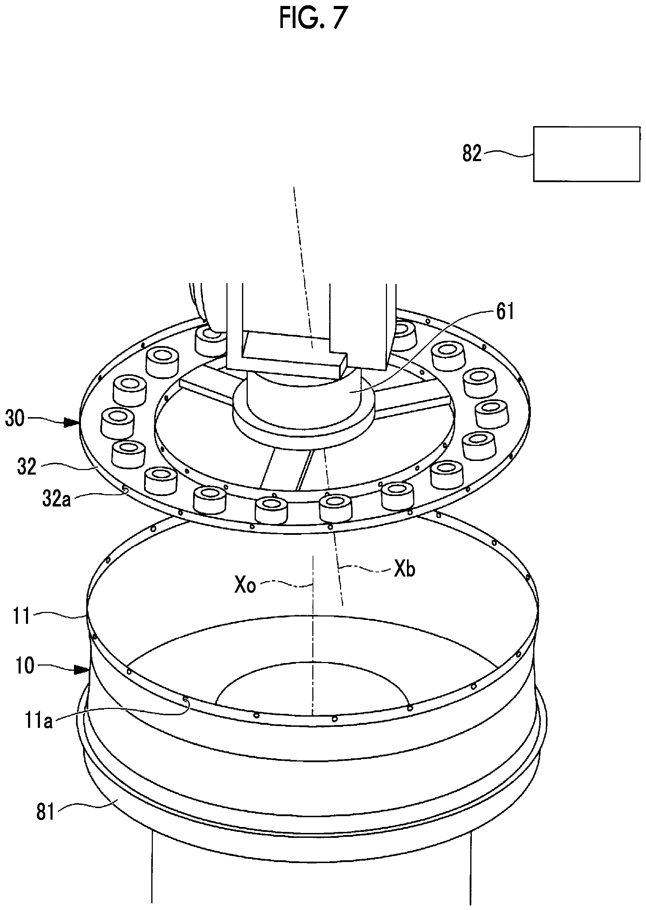

As illustrated in Fig. 7, the bulkhead 30 is clamped by the transport tool 61, and the posture and position of the bulkhead 30 are controlled such that the bulkhead 30 approaches the outer combustor 10 fixed on a fixing jig 81.

At this time, the posture and position of the bulkhead 30 are controlled such that the axis Xb of the bulkhead 30 is inclined with respect to the axis Xo of the outer liner 11.

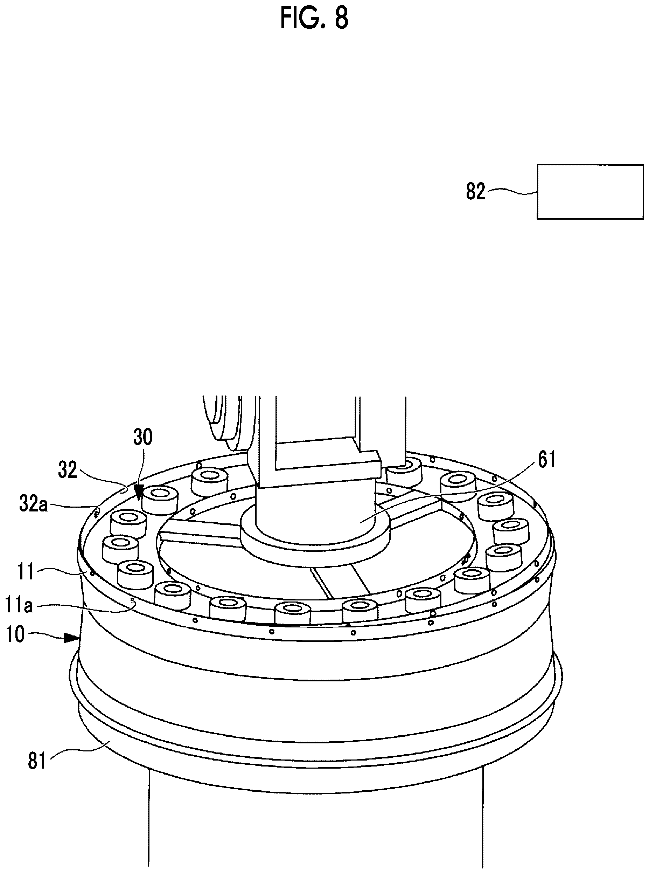

Then, as illustrated in Fig. 8, the posture and position of the bulkhead 30 are controlled such that the outer peripheral surface of the outer wall portion 32 of the bulkhead 30 is brought into contact with the inner peripheral surface of the outer liner 11 in a state in which the bulkhead 30 is inclined with respect to the outer liner 11.

At this time, since the bulkhead 30 is inclined with respect to the outer liner 11, the outer peripheral surface of the outer wall portion 32 of the bulkhead 30 comes into contact with the inner peripheral surface of the outer liner 11 at one point. Then, the bulkhead 30 is positioned with respect to the outer liner 11 at the contact point (S101 in Fig. 6: contact step).

When the bulkhead 30 is positioned, the posture and position of the bulkhead 30 are controlled such that one through-hole 11a at a position corresponding to the contact point is substantially matched with one through-hole 32a at a position corresponding to the contact point.

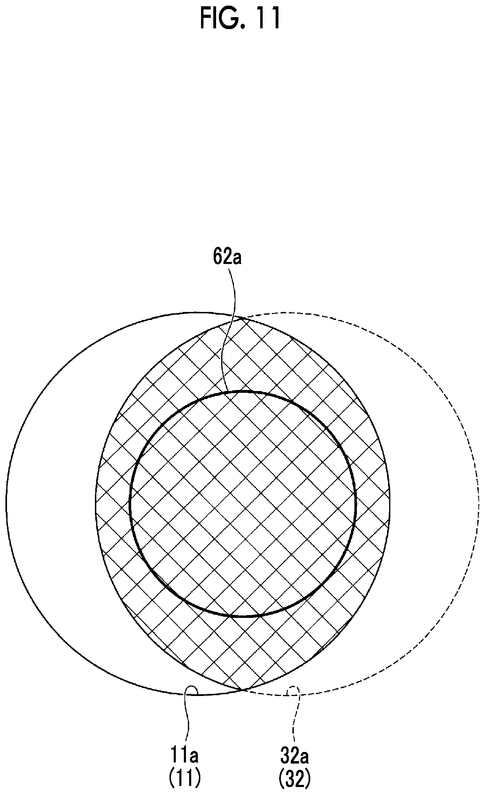

The "substantially matched" stated herein does not mean a state in which the through-hole 11a and the through-hole 32a are completely matched with each other, but means a state in which at least an overlapping region formed by the overlap between the through-hole 11a and the through-hole 32a is present. The "overlapping region" means a region that penetrates in a front-rear direction and that is formed when one through-hole 11a and one through-hole 32a corresponding to the through-hole 11a overlap each other, for example, in the front-rear direction (the overlapping region is represented by cross-hatching in Fig. 11).

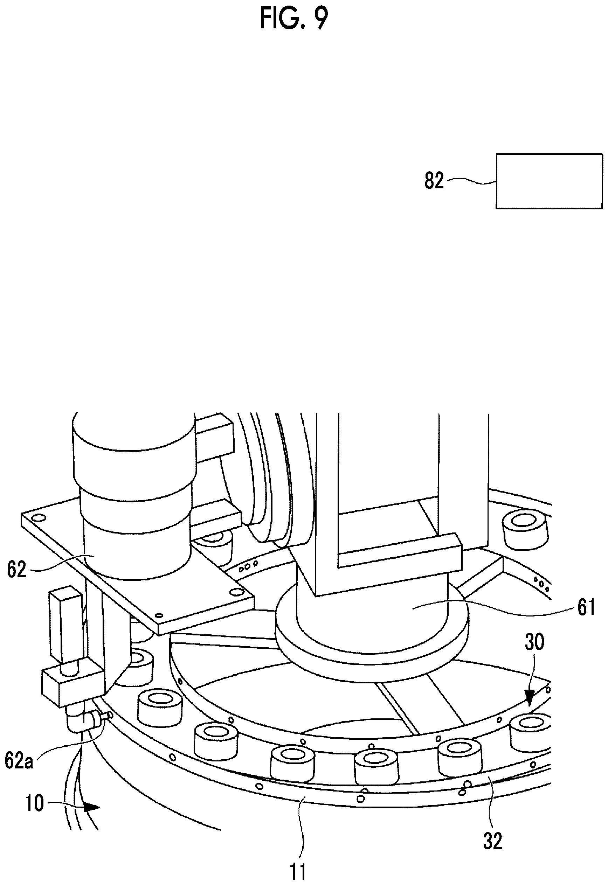

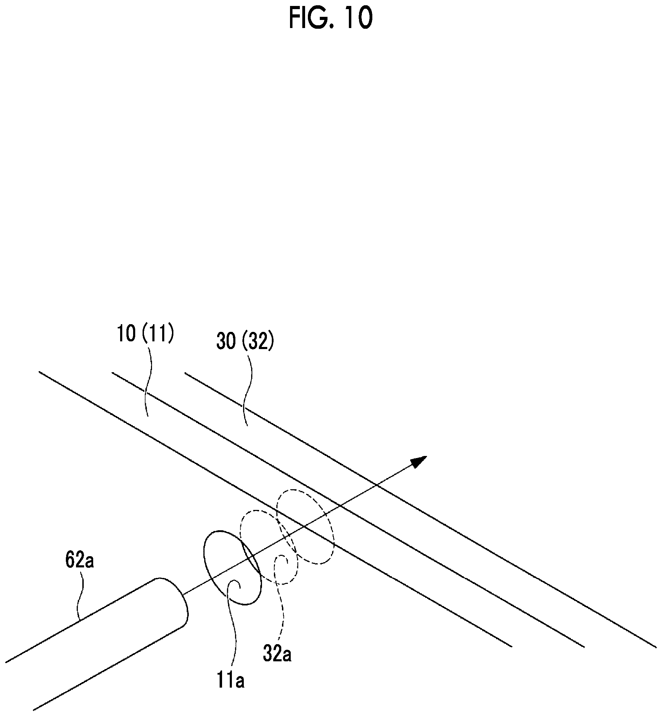

When the positioning of the bulkhead 30 is completed, as illustrated in Figs. 9 to 11, the posture and position of the hole alignment tool 62 are controlled such that an alignment pin 62a (deformable shaft member) is inserted into the overlapping region between the through-hole 11a and the through-hole 32a (S102 in Fig. 6). This makes it possible to prevent the bulkhead 30 from deviating from the outer liner 11 due to the work or the operation which will be described below.

As illustrated in Fig. 9, the alignment pin 62a is provided in the hole alignment tool 62.

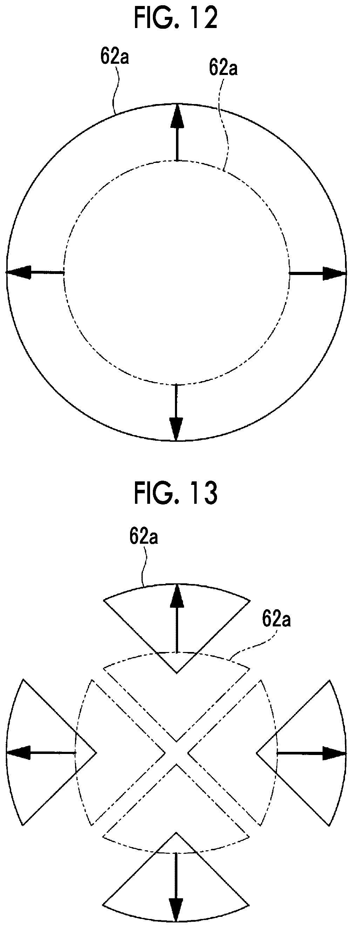

As illustrated in Fig. 12, the alignment pin 62a is a shaft member whose outer diameter can be enlarged.

In Fig. 12, a two-dot chain line represents the outer diameter (outer shape) of the alignment pin 62a before deformation, and a solid line represents the outer diameter (outer shape) of the alignment pin 62a after deformation. The outer diameter before deformation is smaller than the inner diameters of the through-hole 11a and the through-hole 32a. It is preferable that the outer diameter after deformation is approximately the same as the inner diameters of the through-hole 11a and the through-hole 32a.

As illustrated in Fig. 13, an alignment pin adopting a mechanism in which a fan-shaped member divided into four parts is configured to be movable in a radial direction is given as an example of the alignment pin 62a.

However, the mechanism is only an example, and any mechanism may be adopted as long as the shaft member can enlarge its outer diameter or outer shape.

The alignment pin 62a functions as follows.

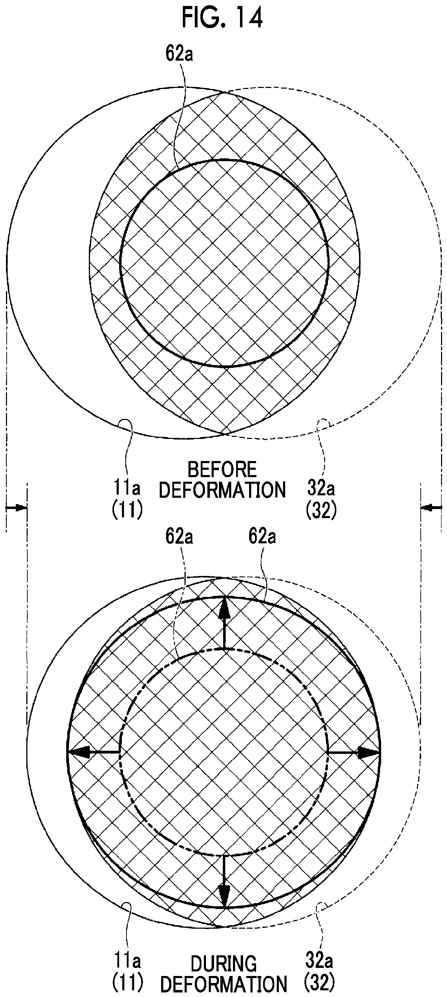

That is, as illustrated in Fig. 14, first, the outer diameter of the alignment pin 62a is enlarged in a state in which the alignment pin 62a is inserted into the through-hole 11a and the through-hole 32a forming the overlapping region.

Then, in the enlargement process, an outer peripheral surface of the alignment pin 62a comes into contact with an inner peripheral edge of the through-hole 11a and an inner peripheral edge of the through-hole 32a. Further, the alignment pin 62a continues to be enlarged even after the contact such that the through-hole 11a (outer liner 11) and the through-hole 32a (bulkhead 30) are moved in a direction in which the size of the overlapping region increases. That is, the outer liner 11 and/or the bulkhead 30 are moved in a direction in which the through-hole 11a and the through-hole 32a are more matched with each other. Hereinafter, this operation is referred to as a "hole alignment operation".

The "size of the overlapping region" is a concept including the dimensions (for example, a width dimension or a height dimension) of the overlapping region, the area of the overlapping region, the size of the overlapping region, and the like. The size of the overlapping region is a parameter for determining the degree of alignment (degree of matching) between the through-hole 11a and the through-hole 32a forming the overlapping region. As the size of the overlapping region is larger, the degree of alignment is larger.

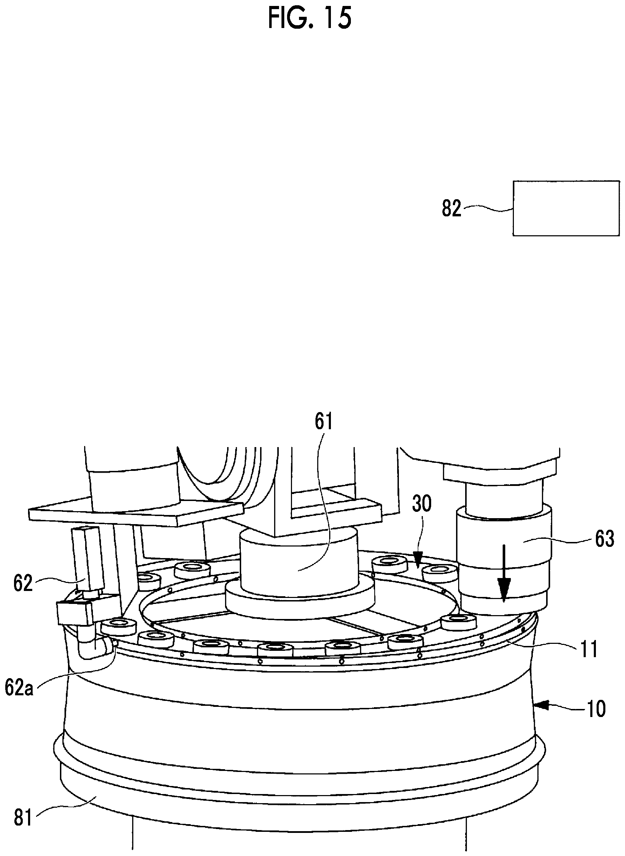

After the hole alignment operation is performed in one overlapping region in the vicinity of the contact point used for positioning, the bulkhead 30 is fitted into the outer liner 11 as illustrated in Fig. 15 (S103 in Fig. 6: fitting step).

The fitting of the bulkhead 30 is performed by controlling the posture and position of the pushing tool 63. Specifically, a portion (for example, a portion on the side opposite to the contact point) of the bulkhead 30 that is floating with respect to the outer liner 11 is pushed by the pushing tool 63 to slowly fit the bulkhead 30 to the outer liner 11, using the contact point with the outer liner 11 as a fulcrum.

At this time, it is preferable to perform image recognition on the outer peripheral surface (preferably, the entire periphery) of the outer liner 11 in a direction orthogonal to the axis Xo (for example, a lateral direction) with a vision sensor or the like. Specifically, the size of each overlapping region corresponding to each point and position is recognized with the image.

This makes it possible to ascertain the degree of alignment (degree of matching) between the through-hole 11a and the through-hole 32a at each point. Then, when the control unit 82 determines that the through-hole 11a and the through-hole 32a have been approximately aligned with each other at all the points, the control unit 82 determines that the fitting of the bulkhead 30 has been completed (S104 in Fig. 6).

When the fitting operation is completed, the axis Xb of the bulkhead 30 is substantially matched with the axis Xo of the outer liner 11.

In the fitting operation, the bulkhead 30 is pushed such that the axis Xb of the inclined bulkhead 30 is gradually matched with the axis Xo of the outer liner 11. Therefore, the contact area of the outer wall portion 32 of the bulkhead 30 with the inner peripheral surface of the outer liner 11 gradually increases.

Therefore, it is possible to push the bulkhead 30 with less force and stably as compared to a case where the bulkhead 30 is pushed in a state in which the axis Xb of the bulkhead 30 and the axis Xo of the outer liner 11 are matched with each other from the beginning.

When the fitting operation of the bulkhead 30 is completed, the transport tool 61, the hole alignment tool 62, and the pushing tool 63 are retracted from the target object (S105 in Fig. 6).

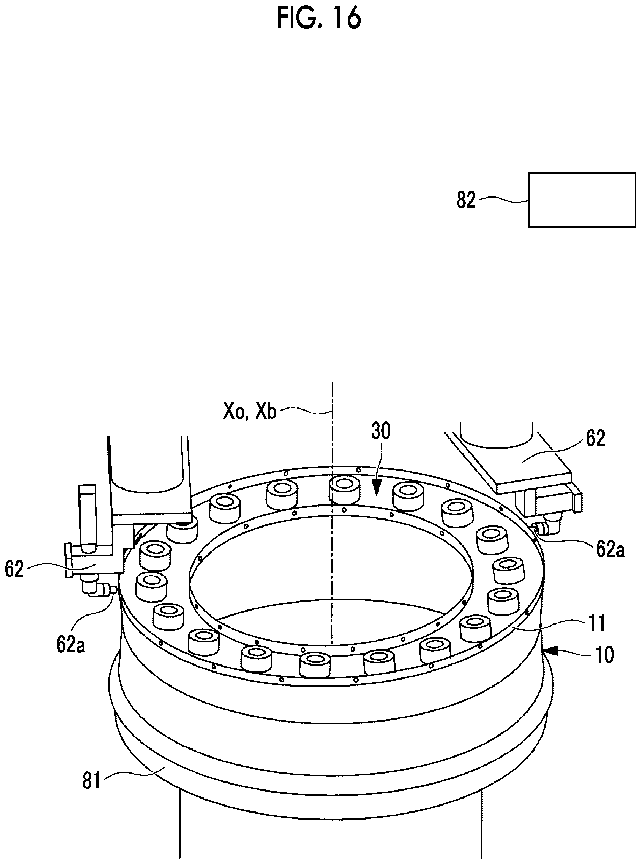

When the retraction of each tool is completed, as illustrated in Fig. 16, the hole alignment tool 62 (alignment pin 62a) is controlled such that the hole alignment operation is performed for all of the overlapping regions (S106 in Fig. 6: initial positioning step).

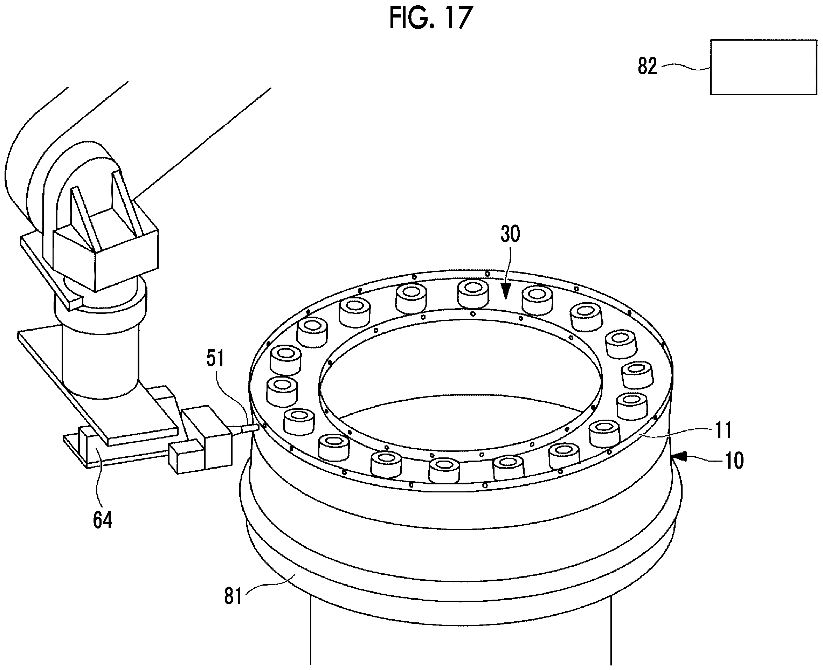

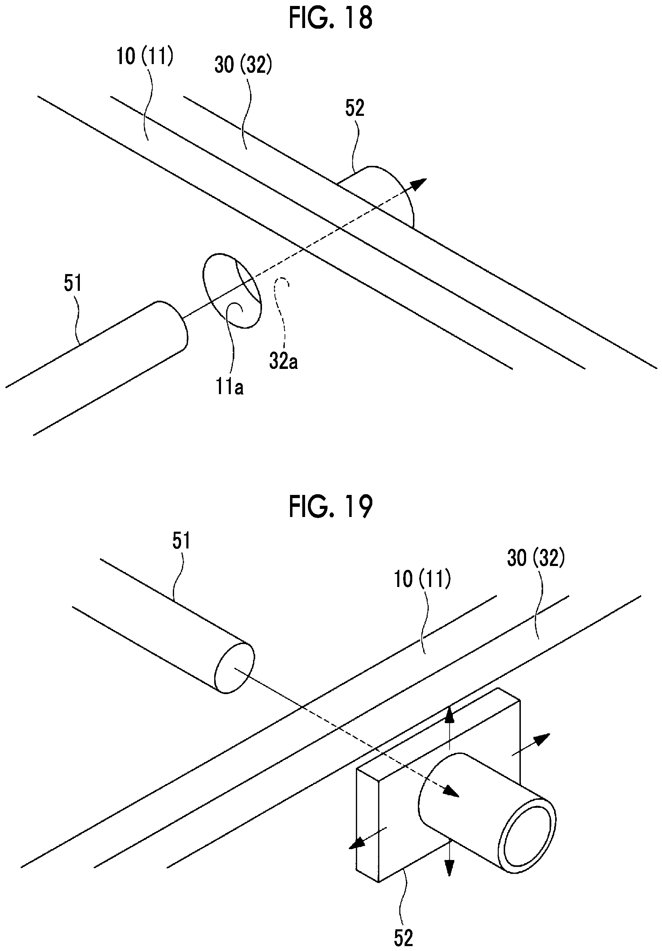

When all of the hole alignment operation is completed, as illustrated in Figs. 17 and 18, the posture and position of the nut runner 64 are controlled such that the bolts 51 (shaft members) are inserted into all of the overlapping regions.

As illustrated in Fig. 17, the bolt 51 is held by the nut runner 64.

As illustrated in Fig. 19, the nut plate 52 (nut portion) is provided on an inner peripheral surface of the outer wall portion 32 of the bulkhead 30.

The nut plate 52 is connected to the outer wall portion 32, but has a movable range in which the nut plate 52 can be moved within a predetermined range. The movable range is in a plane orthogonal to the axial direction of the bolt 51.

After the bolt 51 is inserted, the nut runner 64 is controlled such that a tip of the bolt 51 is screwed to the nut plate 52 (the bolt 51 is rotated). This operation is performed at all of the points. In this way, the bolt 51 is temporarily tightened (S107 in Fig. 6).

As described above, since the nut plate 52 has the movable range, the bolt 51 can be moved together with the nut plate 52 in the temporarily tightened state.

When the bolt 51 is temporarily tightened, the size of the overlapping region is detected at all of the points (S108 in Fig. 6: size detection step).

Hereinafter, a specific method is given as an example.

### <Example 1 of Size Detection Step>

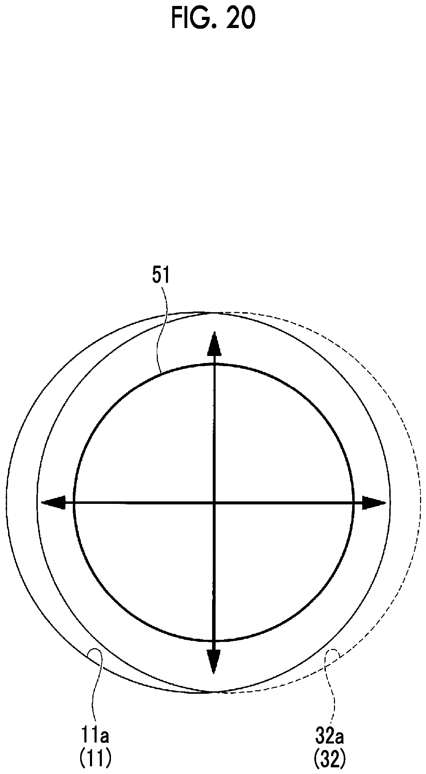

As illustrated in Fig. 20, first, the bolt 51 inserted into the overlapping region in the temporarily tightened state is moved in a direction (for example, an up-down direction and a left-right direction) orthogonal to the axial direction by the nut runner 64.

The moved bolt 51 comes into contact with the inner peripheral edge of the through-hole 11a and/or the inner peripheral edge of the through-hole 32a. When the bolt 51 comes into contact with the inner peripheral edge, a load is applied to the nut runner 64 holding the bolt 51. Therefore, the movement of the bolt 51 is stopped at that position, and the control unit 82 acquires the coordinates of that position. Then, the control unit 82 calculates the dimensions of the overlapping region on the basis of the acquired coordinates. That is, the control unit 82 detects the amount of backlash of the bolt 51 in the overlapping region.

This makes it possible to detect the size of the overlapping region.

### <Example 2 of Size Detection Step>

The nut runner 64 rotates the bolt 51 in the temporarily tightened state in a direction of further tightening, and a tightening torque generated at that time is detected. The control unit 82 acquires the value of the tightening torque.

In a case where the overlapping region is large, a spatial margin between the outer peripheral surface of the bolt 51 and the inner peripheral edges of the through-hole 11a and the through-hole 32a is large. Therefore, the tightening torque tends to be less likely to increase.

On the other hand, in a case where the overlapping region is small, the spatial margin is small. In the process of tightening the bolt 51, the bolt 51 is likely to be caught by the inner peripheral edge of the through-hole 11a and/or the inner peripheral edge of the through-hole 32a. In this case, the tightening torque tends to increase.

As described above, the tightening torque may be measured to predict the size of the overlapping region.

Then, the control unit 82 specifies the overlapping region, in which a positional relationship between the through-hole 11a and the through-hole 32a needs to be adjusted, on the basis of the detected sizes of all of the overlapping regions (S109 in Fig. 6: overlapping region specification step).

Specifically, a method in which the control unit 82 (1) calculates an average value of the sizes of the overlapping regions on the basis of the sizes of all of the overlapping regions and (2) determines the overlapping region deviating from the average value by a predetermined value or more as the "overlapping region that needs to be adjusted" is given as an example.

The predetermined value is set in advance, but can be appropriately changed.

Basically, the overlapping region that is smaller than the average value by the predetermined value or more is determined as the "overlapping region that needs to be adjusted". This is because the overlapping region is adjusted to be expanded in a positioning step which will be described below.

As another example, the overlapping region with a lower limit value that is out of a set predetermined range may be determined as the "overlapping region that needs to be adjusted". That is, the overlapping region smaller than a predetermined size may be determined as the "overlapping region that needs to be adjusted".

When the overlapping region that needs to be adjusted" is specified, the positional relationship between the through-hole 11a and the through-hole 32a forming the overlapping region is adjusted (S201 in Fig. 6: positioning step).

Specifically, a method that moves the bolt 51 in the temporarily tightened state in a direction orthogonal to the axial direction with the nut runner 64 to move the position of the through-hole 11a and/or the position of the through-hole 32a is given as an example.

As another example, the temporarily tightened bolt 51 may be removed once, and the hole alignment operation may be performed for the overlapping region with the alignment pin 62a. After the hole alignment operation, the bolt 51 is temporarily tightened again.

When the adjustment of the positional relationship for all of the target overlapping regions is completed, Step S109 is executed again. Thereafter, this is repeated until there is no overlapping region that needs to be adjusted.

This makes it possible to uniformize the sizes of the overlapping regions at all of the points.

When the sizes of the overlapping regions are uniformized at all of the points, all of the bolts 51 are tightened by the nut runner 64 to perform the main tightening (S110 in Fig. 6).

In this manner, the bulkhead 30 is fastened to the outer combustor 10 at an appropriate position (S111 in Fig. 6).

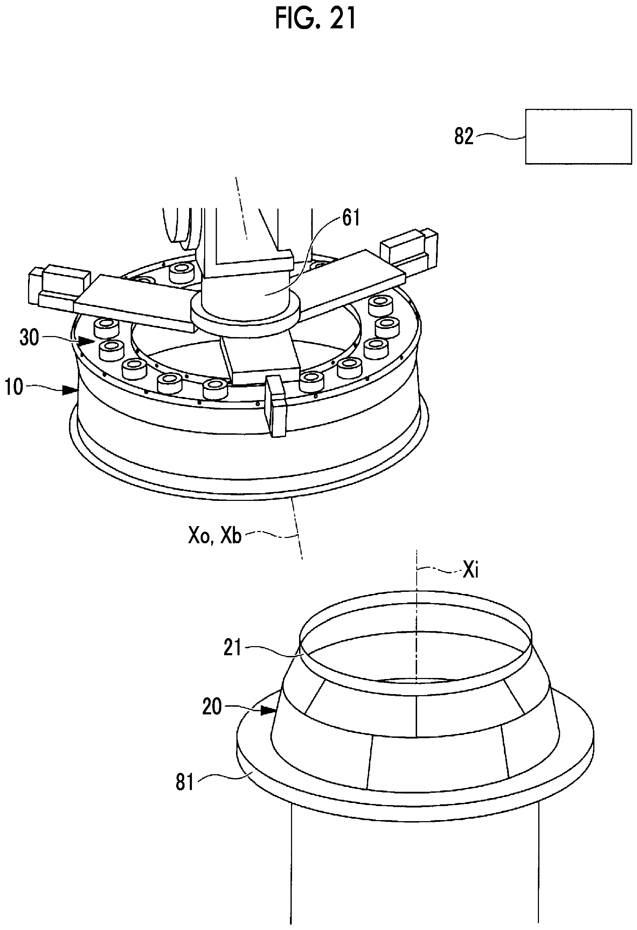

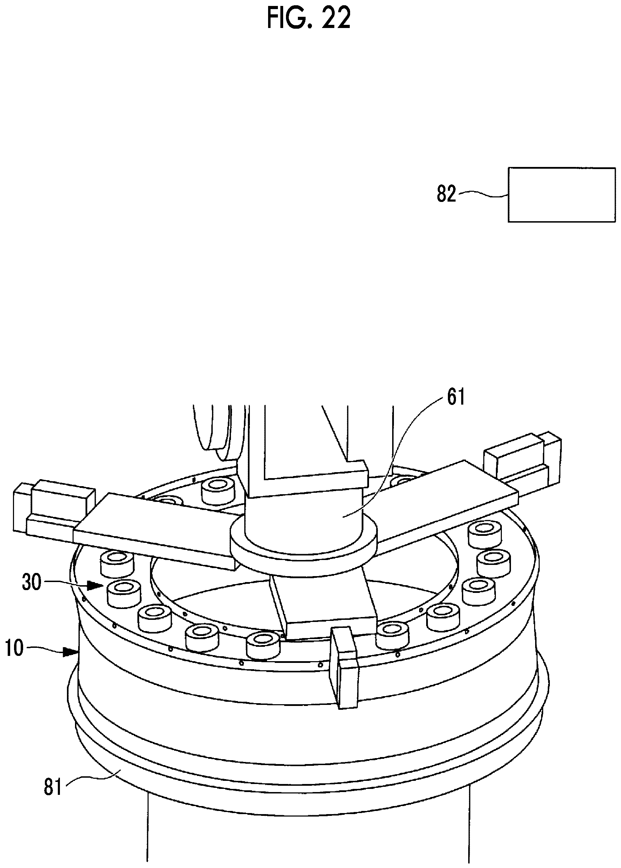

Then, as illustrated in Figs. 21 and 22, the assembly of the outer combustor 10 and the bulkhead 30 is clamped by the transport tool 61, and the posture and position of the assembly are controlled such that the assembly approaches the inner combustor 20 fixed on the fixing jig 81.

At this time, the posture and position of the assembly are controlled such that the axis (the axis Xo and the axis Xb) of the assembly is inclined with respect to the axis Xi of the inner liner 21 (S112 in Fig. 6).

Thereafter, the same steps as the steps performed to assemble the outer combustor 10 and the bulkhead 30 are repeated to assemble the assembly and the inner combustor 20. At this time, the bulkhead 30 of the assembly (specifically, the inner wall portion 33) becomes the first tubular body, and the inner combustor 20 (specifically, the inner liner 21) becomes the second tubular body.

In this way, the combustor 1 is finally assembled.

The present embodiment has the following effects.

The computer executes the size detection step of detecting the size of the overlapping region between the through-hole 11a and the through-hole 32a in a state in which the bulkhead 30 is fitted to the outer liner 11 and the overlapping region specification step of specifying the overlapping region, in which the positional relationship between the through-hole 11a and the through-hole 32a needs to be adjusted, on the basis of the sizes of all of the overlapping regions. Therefore, it is possible to easily specify the overlapping region that needs to be adjusted from a plurality of overlapping regions.

The size detection step is performed by inserting the bolt 51 into the overlapping region and detecting the amount of backlash of the bolt 51 in a direction orthogonal to the insertion direction. Therefore, it is possible to measure the size of the overlapping region with a simple method.

The size detection step is performed by inserting the bolt 51 into the overlapping region and detecting the torque generated when the bolt 51 is screwed to the nut plate 52 provided on the bulkhead 30. Therefore, it is possible to predict the size of the overlapping region with a simple method.

The computer executes the positioning step of adjusting the positional relationship between the through-hole 11a and the through-hole 32a forming the overlapping region determined to need to be adjusted. Therefore, it is possible to adjust the positional relationship between the through-hole 11a and the through-hole 32a that are not in an appropriate range to an appropriate position.

This makes it possible to uniformize the sizes of the overlapping regions at all of the points.

The computer executes the contact step of bringing the outer peripheral surface of the bulkhead 30 (the outer peripheral surface of the outer wall portion 32) into contact with the inner peripheral surface of the outer liner 11 in a state in which the axis Xb is relatively inclined with respect to the axis Xo and the fitting step of fitting the bulkhead 30 to the outer liner 11 such that the axis Xo is matched with the axis Xb, using the contact point between the outer liner 11 and the bulkhead 30 as a fulcrum, before the size detection step. Therefore, it is possible to gradually apply a load to fit the bulkhead 30 to the outer liner 11 while performing the positioning between the outer liner 11 and the bulkhead 30 at the contact point.

The computer executes the initial positioning step of adjusting the positional relationship between the through-hole 11a and the through-hole 32a forming the overlapping region after the fitting step and before the size detection step. Therefore, it is possible to expand the overlapping region as much as possible in advance.

The positioning step is performed by moving the bolt 51 inserted into the overlapping region in the direction orthogonal to the insertion direction. Therefore, the positional relationship between the through-hole 11a and the through-hole 32a can be adjusted by bringing the bolt 51 into contact with the inner peripheral edge of the through-hole 11a or the inner peripheral edge of the through-hole 32a and further moving the bolt 51 in this state to move the through-hole 11a (the outer liner 11) or the through-hole 32a (the bulkhead 30).

The positioning step is performed by the alignment pin 62a whose diameter is enlarged in a state in which the alignment pin 62a is inserted into the overlapping region. Therefore, the positional relationship between the through-hole 11a and the through-hole 32a can be adjusted by enlarging the diameter of the alignment pin 62a in the overlapping region to move the through-hole 11a (outer liner 11) or the through-hole 32a (bulkhead 30).

The initial positioning step is performed by the alignment pin 62a whose diameter is enlarged in a state in which the alignment pin 62a is inserted into the overlapping region. Therefore, the positional relationship between the through-hole 11a and the through-hole 32a can be adjusted by enlarging the diameter of the alignment pin 62a in the overlapping region to move the through-hole 11a (outer liner 11) or the through-hole 32a (bulkhead 30).

For example, the assembly method and the assembly device according to the present embodiment described above are understood as follows.

That is, according to a first aspect of the present disclosure, there is provided an assembly method for fitting, to a first tubular body (11) that has a plurality of first through-holes (11a) formed along a circumferential direction having a first axis (Xo) as a central axis, a second tubular body (30) that has a plurality of second through-holes (32a) formed along a circumferential direction having a second axis (Xb) as a central axis at a predetermined position to assemble the first tubular body and the second tubular body. The assembly method includes causing a computer to execute: a size detection step of detecting a size of an overlapping region between each of the first through-holes and each of the second through-holes corresponding to each other in a state in which the second tubular body is fitted to the first tubular body; and an overlapping region specification step of specifying the overlapping region in which a positional relationship between the first through-hole and the second through-hole needs to be adjusted, on the basis of the sizes of all of the overlapping regions.

According to the assembly method of the present aspect, the computer executes the size detection step of detecting the size of the overlapping region between the first through-hole and the second through-hole in a state in which the second tubular body is fitted to the first tubular body and the overlapping region specification step of specifying the overlapping region in which the positional relationship between the first through-hole and the second through-hole needs to be adjusted, on the basis of the sizes of all of the overlapping regions. Therefore, it is possible to easily specify the overlapping region that needs to be adjusted among a plurality of overlapping regions.

According to a second aspect of the present disclosure, in the assembly method according to the first aspect, the size detection step is performed by inserting a shaft member (51) into the overlapping region and detecting an amount of backlash of the shaft member in a direction orthogonal to an insertion direction.

According to the assembly method of the present aspect, the size detection step is performed by inserting the shaft member into the overlapping region and detecting the amount of backlash of the shaft member in the direction orthogonal to the insertion direction. Therefore, it is possible to measure the size of the overlapping region with a simple method.

According to a third aspect of the present disclosure, in the assembly method according to the first aspect or the second aspect, the size detection step is performed by inserting a bolt into the overlapping region and detecting torque generated when the bolt is screwed to a nut portion (52) provided on the second tubular body.

According to the assembly method of the present aspect, the size detection step is performed by inserting the bolt into the overlapping region and detecting the torque generated when the bolt is screwed to the nut portion provided in the second tubular body. Therefore, it is possible to predict the size of the overlapping region with a simple method.

According to a fourth aspect of the present disclosure, the assembly method according to any one of the first to third aspects further includes causing the computer to execute a positioning step of adjusting the positional relationship between the first through-hole and the second through-hole forming the overlapping region determined to need to be adjusted in the overlapping region specification step.

According to the assembly method of the present aspect, the computer executes the positioning step of adjusting the positional relationship between the first through-hole and the second through-hole forming the overlapping region determined to need to be adjusted in the overlapping region specification step. Therefore, it is possible to adjust the positional relationship between the first through-hole and the second through-hole that are not in an appropriate range to an appropriate position.

This makes it possible to uniformize the sizes of the overlapping regions at all of the points.

According to a fifth aspect of the present disclosure, the assembly method according to any one of the first to fourth aspects further includes causing the computer to execute, before the size detection step, a contact step of bringing an outer peripheral surface of the second tubular body into contact with an inner peripheral surface of the first tubular body in a state in which the second axis is relatively inclined with respect to the first axis and a fitting step of fitting the second tubular body to the first tubular body such that the first axis and the second axis are matched with each other, using a contact point between the first tubular body and the second tubular body as a fulcrum.

According to the assembly method of the present aspect, the computer executes the contact step of bringing the outer peripheral surface of the second tubular body with the inner peripheral surface of the first tubular body in the state in which the second axis is relatively inclined with respect to the first axis and the fitting step of fitting the second tubular body to the first tubular body such that the first axis and the second axis are matched with each other, using the contact point between the first tubular body and the second tubular body as a fulcrum, before the size detection step. Therefore, it is possible to gradually apply a load to fit the second tubular body to the first tubular body while positioning the first tubular body and the second tubular body at the contact point.

According to a sixth aspect of the present disclosure, the assembly method according to any one of the first to fifth aspects further includes causing the computer to execute an initial positioning step of adjusting the positional relationship between the first through-hole and the second through-hole forming the overlapping region after the fitting step and before the size detection step.

According to the assembly method of the present aspect, the computer executes the initial positioning step of adjusting the positional relationship between the first through-hole and the second through-hole forming the overlapping region after the fitting step and before the size detection step. Therefore, it is possible to expand the overlapping region as much as possible in advance.

According to a seventh aspect of the present disclosure, in the assembly method according to any one of the first to sixth aspects, an inner diameter of the first tubular body is smaller than an outer diameter of the second tubular body.

According to the assembly method of the present aspect, since the inner diameter of the first tubular body is smaller than the outer diameter of the second tubular body, the first tubular body and the second tubular body have an interference fit relationship. In this case, it is possible to fit the second tubular body to the first tubular body while gradually applying force through the contact step and the fitting step.

According to an eighth aspect of the present disclosure, in the assembly method according to any one of the first to seventh aspects, the positioning step is performed by moving the shaft member inserted into the overlapping region in the direction orthogonal to the insertion direction.

According to the assembly method of the present aspect, the positioning step is performed by moving the shaft member inserted into the overlapping region in the direction orthogonal to the insertion direction. Therefore, the positional relationship between the first through-hole and the second through-hole can be adjusted by bringing the shaft member into contact with the edge of the first through-hole or the edge of the second through-hole and further moving the shaft member in this state to move the first through-hole (first tubular body) or the second through-hole (second tubular body).

According to a ninth aspect of the present disclosure, in the assembly method according to any one of the first to eighth aspects, the positioning step is performed by a deformable shaft member (62a) whose diameter is enlarged in a state in which the deformable shaft member is inserted into the overlapping region.

According to the assembly method of the present aspect, the positioning step is performed by the deformable shaft member whose diameter is enlarged in a state in which the deformable shaft member is inserted into the overlapping region. Therefore, the positional relationship between the first through-hole or the second through-hole can be adjusted by enlarging the diameter of the deformable shaft member in the overlapping region to move the first through-hole (first tubular body) or the second through-hole (second tubular body).

According to a tenth aspect of the present disclosure, in the assembly method according to any one of the first to ninth aspects, the initial positioning step is performed by a deformable shaft member whose diameter is enlarged in a state in which the deformable shaft member is inserted into the overlapping region.

According to the assembly method of the present aspect, the initial positioning step is performed by the deformable shaft member whose diameter is enlarged in a state in which the deformable shaft member is inserted into the overlapping region. Therefore, the positional relationship between the first through-hole and the second through-hole can be adjusted by enlarging the diameter of the deformable shaft member in the overlapping region to move the first through-hole (first tubular body) or the second through-hole (second tubular body).

According to an eleventh aspect of the present disclosure, in the assembly method according to any one of the first to tenth aspects, the first tubular body is an outer liner of a combustor, and the second tubular body is a bulkhead of the combustor, or the first tubular body is the bulkhead of the combustor, and the second tubular body is an inner liner of the combustor.

According to a twelfth aspect of the present disclosure, there is provided an assembly device for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body. The assembly device includes a holding tool that holds a shaft member and a control unit. The control unit controls the holding tool such that the shaft member is inserted into an overlapping region between the first through-hole and the second through-hole, controls the holding tool such that the shaft member is moved in a direction orthogonal to an insertion direction, calculates an amount of backlash of the shaft member in the overlapping region on the basis of an amount of movement of the shaft member, and specifies the overlapping region in which a positional relationship between the first through-hole and the second through-hole needs to be adjusted on the basis of the calculated amounts of backlash in all of the overlapping regions.

According to a thirteenth aspect of the present disclosure, there is provided an assembly device for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body. The assembly device includes a holding tool that holds a bolt and a control unit. The control unit controls the holding tool such that the bolt is inserted into an overlapping region between the first through-hole and the second through-hole and the bolt is screwed to a nut portion provided on the second tubular body and specifies the overlapping region in which a positional relationship between the first through-hole and the second through-hole needs to be adjusted on the basis of torque of the bolt when the bolt is screwed to the nut portion.

### Reference Signs List

1 Combustor
10 Outer combustor
11 Outer liner
11a Through-hole
12 Panel (outer liner panel)
12a Stud
12b Washer
12c Nut
20 Inner combustor
21 Inner liner
21a Through-hole
22 Panel (inner liner panel)
22a Stud
22b Washer
22c Nut
30 Bulkhead
31 Bottom portion
32 Outer wall portion
32a Through-hole
33 Inner wall portion
33a Through-hole
40 Hood
51 Bolt (shaft member)
52 Nut plate (nut portion)
61 Transport tool
62 Hole alignment tool
62a Alignment pin (deformable shaft member)
63 Pushing tool
64 Nut runner (holding tool)
81 Fixing jig
82 Control unit
CC Combustion chamber
Xb Axis (axis of bulkhead)
Xi Axis (axis of inner liner)
Xo Axis (axis of outer liner)

## Claims

1. An assembly method for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body, the assembly method comprising:
causing a computer to execute:
a size detection step of detecting a size of an overlapping region between each of the first through-holes and each of the second through-holes corresponding to each other in a state in which the second tubular body is fitted to the first tubular body; and
an overlapping region specification step of specifying the overlapping region in which a positional relationship between the first through-hole and the second through-hole needs to be adjusted, on the basis of the sizes of all of the overlapping regions.

2. The assembly method according to claim 1,
wherein the size detection step is performed by inserting a shaft member into the overlapping region and detecting an amount of backlash of the shaft member in a direction orthogonal to an insertion direction.

3. The assembly method according to claim 1,
wherein the size detection step is performed by inserting a bolt into the overlapping region and detecting torque generated when the bolt is screwed to a nut portion provided on the second tubular body.

4. The assembly method according to claim 1, further comprising:
causing the computer to execute a positioning step of adjusting the positional relationship between the first through-hole and the second through-hole forming the overlapping region determined to need to be adjusted in the overlapping region specification step.

5. The assembly method according to claim 1, further comprising:
causing the computer to execute, before the size detection step:
a contact step of bringing an outer peripheral surface of the second tubular body into contact with an inner peripheral surface of the first tubular body in a state in which the second axis is relatively inclined with respect to the first axis; and
a fitting step of fitting the second tubular body to the first tubular body such that the first axis and the second axis are matched with each other, using a contact point between the first tubular body and the second tubular body as a fulcrum.

6. The assembly method according to claim 5, further comprising:
causing the computer to execute an initial positioning step of adjusting the positional relationship between the first through-hole and the second through-hole forming the overlapping region after the fitting step and before the size detection step.

7. The assembly method according to claim 5,
wherein an inner diameter of the first tubular body is smaller than an outer diameter of the second tubular body.

8. The assembly method according to claim 4,
wherein the positioning step is performed by moving a shaft member inserted into the overlapping region in a direction orthogonal to an insertion direction.

9. The assembly method according to claim 4,
wherein the positioning step is performed by a deformable shaft member whose diameter is enlarged in a state in which the deformable shaft member is inserted into the overlapping region.

10. The assembly method according to claim 6,
wherein the initial positioning step is performed by a deformable shaft member whose diameter is enlarged in a state in which the deformable shaft member is inserted into the overlapping region.

11. The assembly method according to claim 1,
wherein the first tubular body is an outer liner of a combustor, and the second tubular body is a bulkhead of the combustor, or
the first tubular body is the bulkhead of the combustor, and the second tubular body is an inner liner of the combustor.

12. An assembly device for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body, the assembly device comprising:
a holding tool that holds a shaft member; and
a control unit,
wherein the control unit controls the holding tool such that the shaft member is inserted into an overlapping region between the first through-hole and the second through-hole, controls the holding tool such that the shaft member is moved in a direction orthogonal to an insertion direction, calculates an amount of backlash of the shaft member in the overlapping region on the basis of an amount of movement of the shaft member, and specifies the overlapping region in which a positional relationship between the first through-hole and the second through-hole needs to be adjusted on the basis of the calculated amounts of backlash in all of the overlapping regions.

13. An assembly device for fitting, to a first tubular body that has a plurality of first through-holes formed along a circumferential direction having a first axis as a central axis, a second tubular body that has a plurality of second through-holes formed along a circumferential direction having a second axis as a central axis at a predetermined position to assemble the first tubular body and the second tubular body, the assembly device comprising:
a holding tool that holds a bolt; and
a control unit,
wherein the control unit controls the holding tool such that the bolt is inserted into an overlapping region between the first through-hole and the second through-hole and the bolt is screwed to a nut portion provided on the second tubular body, and specifies the overlapping region in which a positional relationship between the first through-hole and the second through-hole needs to be adjusted on the basis of torque of the bolt when the bolt is screwed to the nut portion.
